# EUROPEAN PATENT SPECIFICATION

(11) **EP 0 721 077 B1**
(45) Date of publication and mention of the grant of the patent: **05.12.2001**
(21) Application number: 96200880.1
(22) Date of filing: 21.08.1992
(51) Int. Cl.: F16J 15/08

(54) **Metal gasket**
Metalldichtung
Joint d'étanchéité métallique

(30) Priority: 21.08.1991 JP 23244991
(43) Date of publication of application: 10.07.1996
(62) Divisional of application: 92307644.2
(73) Proprietor: NIPPON GASKET COMPANY Ltd., Higashiosaka-shi, Osaka-fu (JP); TOYOTA JIDOSHA KABUSHIKI KAISHA, Aichi-ken (JP)
(72) Inventor: Kawaguchi, Shigeru, Daitou-shi, Osaka 574 (JP); II, Naoki, Moriguchi-shi, Osaka 570 (JP); Kubouchi, Kenji, Hirataka-shi, Osaka 573 (JP); Inoue, Kunitoshi, Higashiosaka-shi, Osaka 578 (JP)
(74) Representative: Jenkins, Peter David

(56) References cited:
- EP-A- 0 306 766

## Description

This invention relates to a metal gasket used for sealing fitting surfaces between a cylinder head and a cylinder block in a multiple-cylinder engine.

A metal gasket made from a metal material has been used conventionally for sealing a cylinder head and a cylinder block in an engine. The metal gasket has beads near through-holes corresponding to cylinder bores, water passages and oil passages, and when the cylinder head and the cylinder block are fastened and fixed by bolts, the beads form elastic annular contact portions to the opposed fitting surfaces and seal the same.

In engines of the recent types, however, a higher output and a smaller weight have been required, and an aluminum material having a low specific gravity tends to be employed in place of conventional materials having a high specific gravity, such as steel and castings, to produce the cylinder head, the cylinder block, and so forth. The aluminum material has low weight but also has low rigidity.
Therefore, relative displacement of the cylinder head to the cylinder block tends to become great during the operation of the engine. When the opposed fitting surfaces of these structural materials are fastened by bolts through a single plate metal gasket, the opposed fitting surfaces are likely to be non-uniform because the bolt positions are dispersed relative to the outer peripheral portions of the metal gasket and are not always distributed uniformly to the periphery of the cylinder bores, that is, the holes for combustion chambers. As a result, a combustion gas having a high temperature and a high pressure enters the gap between the opposed fitting surfaces at positions having a large distortion, such as in the regions between the holes for combustion chambers, and corrodes and contaminates the beads of the metal gasket, lowering thereby the sealing effect.

In the case of a metal gasket, the gap between the cylinder head and the cylinder block repeatedly increases or decreases during the combustion cycles of the engine, and stresses, that is, mechanical stress and thermal stress, repeatedly act on the metal gasket. This load change stress is high at the portions of the cylinder block and the cylinder head having lowest rigidity, so that the beads undergo buckling, cracks occur, and sealing performance is reduced.

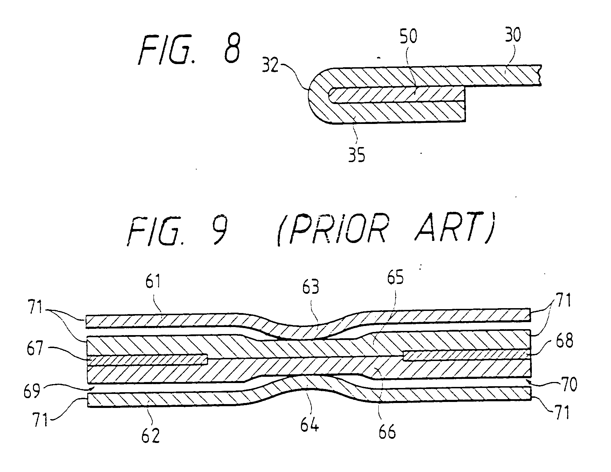

A metal gasket disclosed in Japanese Patent Laid-Open No. 293363/1988 is shown in Fig. 9. As shown in the drawing, two intermediate plates 65, 66 are laminated between elastic metal plates 61, 62 having beads 63, 64 so formed as to extend along the periphery of each hole 71, and spacer members 67, 68 are clamped between the two intermediate plates 65, 66 at portions closer to the hole 71 than the contact portion of the beads 63, 64. Compensation portions 69, 70 are provided so as to compensate for any non-uniformity between the deck surfaces. In the metal gasket, the spacer members 67, 68 are clamped between the two intermediate plates 65, 66 at the portions closer to the hole 71 than the contact portion of the beads 63, 64. Therefore, one additional contact surface is provided to bear the sealing force. The spacer members 67, 68 must be fixed to the intermediate plates 65, 66 by means such as welding, bonding, and so forth.

The metal gasket disclosed in Japanese Patent laid-Open No. 65367/1989 (equivalent to EP-A-0306766) laminates two intermediate plates between two elastic metal plates forming beads along the periphery of holes. The edge of one of the intermediate plates is held in the form of a grommet by the edge of the other intermediate plate, and bent compensation portions are disposed on both surfaces so as to form substantially the same offset portions on both surfaces. In this metal gasket, the edge of one of the intermediate plates is held in the grommet form by the edge of the other, substantially the same offset portions are formed on both surfaces, and the bent portions are provided for compensation. When clamped by bead substrates on both sides and compressed under the buckled state between the cylinder head and the cylinder block, the turnup offset portions,held in the grommet form,function as the seam of the beads. As a result, the stress amplitude of the elastic metal plate decreases, but the bending stress and the stress amplitude occur at the turnup portions of the intermediate plates due to the difference in operation of the upper and lower elastic metal plates.

It is therefore an aim of the present invention to provide a metal gasket which interposes an elastic metal regulation plate between a pair of elastic metal plates having beads, forms turnup portions having a large thickness at the edge portions of holes for combustion chambers of the regulation plate, prevents full compression of each bead of a pair of elastic metal plates by the turnup portions to prevent buckling of each hole, forms compensation portions in the periphery of each hole, sets the thickness of the compensation portions to such a thickness to maintain a good balance in the face-to-face sealing pressure, prevents breakage of the beads and the compensation portions and the decrease in sealing effect, or interposes an intermediate plate between one of the elastic metal plates and the regulation plate so as to provide a stable sealing effect without causing damage, such as cracks, even when a stress fluctuation is applied to the intermediate plate.

EP-A-0306766 discloses a gasket having the features of the precharacterising portion of claim 1.

Accordingly, the present invention provides a metal gasket including elastic metal plates disposed in use between a cylinder block and a cylinder head fixed to said cylinder block, which are made of a metal material, and having holes for combustion chambers and beads as seal portions having convexities on one of the surfaces thereof and concavities on the other surface formed along said holes, said elastic metal plates comprising first and second elastic metal plates, and a regulation plate and an intermediate plate disposed between said first and second elastic metal plates, said first elastic metal plate having holes and beads formed along said holes, said beads having convexities on one of the surfaces thereof and concavities on the other surface thereof, said second elastic metal plate being so disposed as to oppose said regulation plate, said regulation plate having holes matching with said holes in said first elastic metal plate and turnup portions facing outward in a radial direction of said holes defined therein; said intermediate plate having offset portions formed along said holes defined therein, said offset portions extending toward said second elastic metal plate, said convexities of said beads of said second elastic metal plate being laminated on said intermediate plate along the outside of said offset portions, said convexities of said second beads opposing and being in mutual contact with said intermediate plate, and said offset portions being shaped to a height smaller than the height of said beads of said second elastic metal plate so as to prevent full compression of said beads of said second elastic metal plate, characterised in that said regulation plate has offset portions formed along said holes defined therein, said offset portions extending toward said first elastic metal plate, in that said turnup portions are turned up towards said intermediate plate, said convexities of said beads of said first elastic metal plate being laminated on said regulation plate along the outside of said offset portions, in that said turnup portions are laminated on said intermediate plate so as to come in close surface-to-surface contact with the intermediate plate with leaving no clearance between them, and in that said offset portions are shaped to a height smaller than the height of said beads of said first elastic metal plate so as to prevent full compression of said beads of said first elastic metal plate.

Thus, when this metal gasket is clamped and brought into the pressed state between the opposed fitting surfaces of the cylinder head and the cylinder block, each elastic metal plate undergoes deformation, and each bead of each elastic metal plate is strongly pushed to the opposed fitting surfaces at the annular portion where the bead starts and ends as viewed in the radial direction of the hole, and provides a strong double-seal portion. At the same time, the thickness of the turnup portions of the regulation plate is about twice the thickness of the portion consisting of the plate alone. Therefore, it strongly pushes each elastic metal plate to the opposed fitting surfaces around the hole, and other seal portions are formed at the turnup portions. Since the thickness of the turnup portions of the regulation plate is large as described above, the turnup portions function as a stopper for the bead deformation of each elastic metal plate, prevent full compression of the beads of each elastic metal plate, preserve the spring function of the elastic metal plate for a long time and prevent buckling of each elastic metal plate. Furthermore, even when irregularities occur in the opposed fitting surfaces between the cylinder head and the cylinder block at the time of fastening of the metal gasket, not only the head portions of the elastic metal plates, but also the turnup portions of the regulation plate undergo deformation in response to the distortion. Accordingly, the turnup portions function as the compensation portions for compensating for the irregular gap between the opposed fitting surfaces around the holes for combustion chambers where sealing performance is most required. Accordingly, a sufficient sealing function can be obtained.

This metal gasket interposes an intermediate plate between the regulation plate and one elastic metal plate and forms offset portions having a height smaller than the thickness of the turnup portions around the periphery of the holes of the intermediate plate opposing the turnup portions in such a manner as to extend in a departing direction from the turnup portions. When this metal gasket is fastened between opposed fitting surfaces, and when the regulation plate and the elastic metal plate come close to the intermediate plate due to the deformation of the beads, the turnup portions and the offset portions of the regulation plate come into mutual contact before the beads undergo full deformation, because the height of the offset portions of the intermediate plate is smaller than the thickness of the turnup portions. Accordingly, the offset portions of the intermediate plate function as a stopper for the deformation of the beads on the side of the regulation plate. The offset portions function also as a stopper for limiting the deformation of the beads of the elastic metal plate and the regulation plate by the height thereof for the other elastic metal plate. Accordingly, the intermediate plate prevents excessive deformation before each bead undergoes complete compression, and in this way, full compression of each bead of each of the upper and lower elastic metal plates can be prevented reliably. Since the intermediate plate is not provided with turnup portions, it has no site which can initiate fracture even under stress fluctuation. When the height of the offset portions of the intermediate plate is half the thickness of the regulation plate, the stress load to each elastic metal plate is uniform and equal, but when the height of the offset portions of the intermediate plate is changed, the stress load distributed to each elastic metal plate can be increased or decreased. For example, the offset portions of the intermediate plate can be designed in consideration of the rigidity of the cylinder head.

Furthermore, in this metal gasket, the compensation portions provided by the turnup portions of the regulation plate, which is preferably made of a material such as SUS 631, is soft before machining but becomes hardened and highly tough after heat-treatment. Therefore, it can be machined in a desired way and can withstand stress fluctuation and repeated stress for long periods. As an example of machining, the turnup portions of the regulation plate can be formed so as to be thicker in the regions between the holes than in other regions, and provide seal portions which are highly resistant to the leakage of a combustion gas in the regions between the holes where the high temperature corrosive combustion gas is likely to leak.

In the metal gasket, the width of the turnup portions can be changed. In other words, the turnup portions of the regulation plate can be shaped to a large width in the regions between the holes and to a small width in other regions. This metal gasket can provide a wide seal portion capable of blocking the leakage of combustion gas in the regions between the holes where the combustion gas is likely to leak, and the seal face-to-face pressure can be set with good balance in conformity with the rigidity of the cylinder head. Accordingly, a metal gasket having a small stress amplitude but having high durability can be obtained.

In this metal gasket, the strong wide seal portion for withstanding the leakage of the combustion gas is preferably formed in the regions between the holes for combustion chambers where the high temperature and corrosive combustion gas is likely to occur, and therefore ensure a stable seal around these holes. Furthermore, since the thickness of the turnup portions can be adjusted before heat-treatment, any irregularities can be compensated for in conformity with the rigidity of the cylinder head.

If a soft member is interposed in the turnup portions of the regulation plate in this metal gasket, the soft member compensates for an excessive height of the offset portions of the intermediate plate or an excessive height of the beads, facilitates thickness adjustment which will otherwise be very troublesome, and can improve the deformability of the turnup portions. Therefore, when the metal gasket is fastened on opposed fitting surfaces, it can cope with the deformation of each elastic metal plate and can efficiently offset any irregularities in the opposed fitting surfaces. This metal gasket can absorb the vibration occurring between the cylinder head and the cylinder block during the engine operation.

In the metal gasket of the present invention it will be understood that the elastic metal plates are flexible in nature.

Embodiments of the present invention will now be described by way of example only, with reference to the accompanying drawings, in which:
Fig. 1 is a partial plan view showing a metal gasket;
Fig. 2 is an enlarged plan view showing portions between adjacent holes for combustion chambers of the metal gasket of Fig.1;
Fig. 3 is an enlarged sectional view taken along a line A - A in Fig. 1;
Fig. 4 is an enlarged sectional view showing portions between holes for combustion chambers and taken along a line B - B in Fig. 1;
Fig. 5 is an enlarged explanatory view showing the dimensional relationship around the periphery of a hole;
Fig. 6 is an enlarged sectional view showing portions between adjacent holes for combustion chambers of a metal gasket according to a first embodiment of the present invention;
Fig. 7 is an enlarged sectional view showing portions around the holes for combustion chambers and corresponding to the embodiment shown in Fig. 6;
Fig. 8 is an enlarged sectional view showing a metal gasket according to a second embodiment of the present invention and showing a turnup portion interposing a soft member; and
Fig. 9 is a sectional view showing an example of portions between holes for combustion chambers of a conventional metal gasket.

Hereinafter, metal gaskets according to preferred embodiments of the present invention will be described with reference to the drawings.

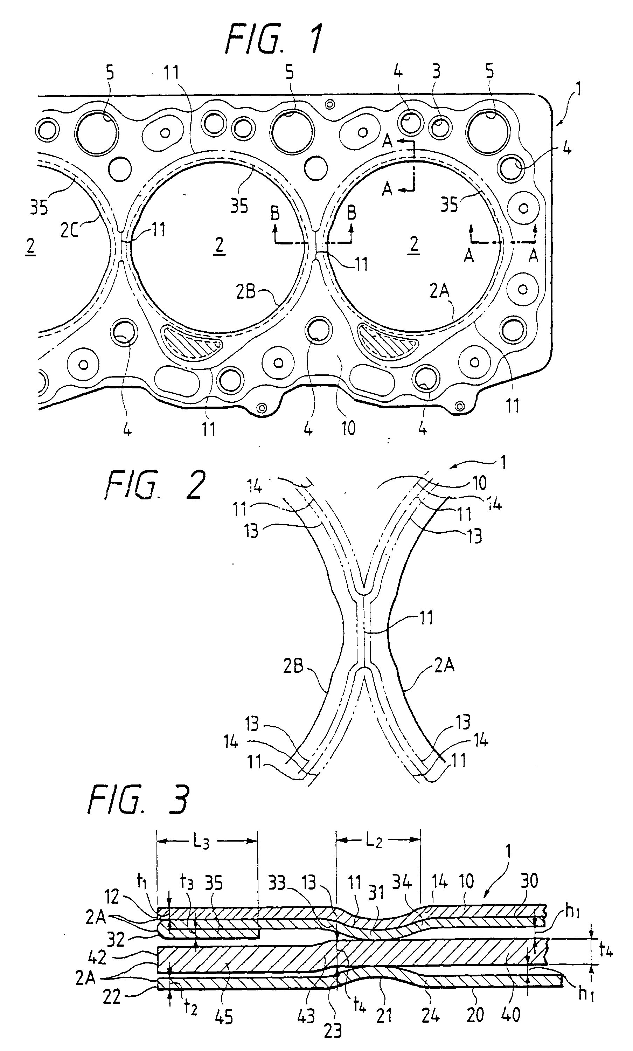

A metal gasket 1 shown in Fig. 1 is used for sealing opposed fitting surfaces between a cylinder head and a cylinder block in a multiple-cylinder diesel engine such as a 4-cylinder or6-cylinder diesel engine. This metal gasket 1 has holes for combustion chambers 2A, 2B, 2C (which will be hereinafter referred to generically as the "holes" and will be represented by reference numeral 2) corresponding in number to the number of cylinders of the engine, that is, cylinder bores.

In this gasket, one of a pair of elastic metal plates positioned on a cylinder head side is used as an upper bead plate 10, and a regulation plate 30 as an intermediate elastic metal plate is superposed on this upper bead plate 10 so as to constitute a double elastic metal plate. The other of the elastic metal plates is used as a lower bead plate 20 positioned on the cylinder block side. A stress amplitude occurring in the elastic metal plate on the cylinder head side during engine operation is greater than that of the elastic metal plate on the cylinder block side. Therefore, in this metal gasket 1, the double elastic metal plate is preferably disposed on the cylinder head side so as to reduce the stress. In other words, the regulation plate (intermediate elastic metal plate) 30 reduces the load stress to the bead plates 10, 20, and hence three elastic metal plates bear the load stress.

Generally, a hard material having a hardness Hv of 350 to 500 is used for the upper and lower elastic metal plates 10, 20 when cold rolling is employed. When the material has a hardness of Hv 350 or below, it is heat treated, and when the material has a hardness of Hv 350 or above, it is used in some cases without heat-treatment. The regulation plate 30 is produced, for example, by turn-up machining and bead machining a material having a hardness Hv of 200 or below, and then heat-treating to a hardness Hv of at least 350. When heat-treatment is carried out, it is possible to use SUS 630 or SUS 631 for precipitation hardening, SUS 304 or SUS 301 or SK materials (SK1 to SK7) for nitriding, SUS 420J₂ or SUS 440A for hardening and tempering treatment, and metal materials such as a titanium alloy or aluminum alloy for a solid solution heat-treatment. The hardness of the blank before bead machining is Hv 200 or below, for example.

A definite example of the hardness of the metal material of the bead plates 10, 20 after each heat-treatment is as follows. When SUS 304 and SUS 301 are subjected to nitriding treatment, the hardness is Hv 200 or below (only at the surface) before heat-treatment, and is Hv 350 to 400 for SUS 304 and Hv 350 to 500 for SUS 301 after heat-treatment. When SUS 631 is heat-treated, that is, subjected to precipitation hardening treatment, after bead machining, the hardness is Hv 200 or below before heat-treatment and is Hv 350 to 500 after heat-treatment. Besides the above, heat-treatment of SK materials (SK1 to SK7), hardening/tempering treatment of SUS 420J₂, and solid solution heat-treatment of a titanium alloy and an aluminum alloy (6Aℓ - 2Sn - 4Zr - 6Mo) can be carried out.

Water holes 3 for passing cooling water, fastening bolt holes 4, oil holes 5 for passing oil, oil return holes, knock holes, rivet holes, and so forth, are bored at the same position and in the same size in the upper bead plate 10, the lower bead plate 20, the regulation plate 30 and a below-mentioned intermediate plate 40.

A non-metallic material having heat resistance and oil resistance such as a fluoro rubber, resin, etc, is applied to both surfaces of the metal gasket 1, that is, the portions which might be exposed to a combustion gas and the portions which come into mutual metallic contact, to a thickness of about 10 to 50 µm (preferably 25 µm). Such a coating can prevent metal-to-metal contact between the cylinder head and the cylinder block and can secure corrosion resistance, durability and strength of the metal gasket. Even when concavo-convexities exist on the machined surface of the metal gasket, the non-metallic material described above can cover these concavo-convexities and can exhibit a sufficient sealing function.

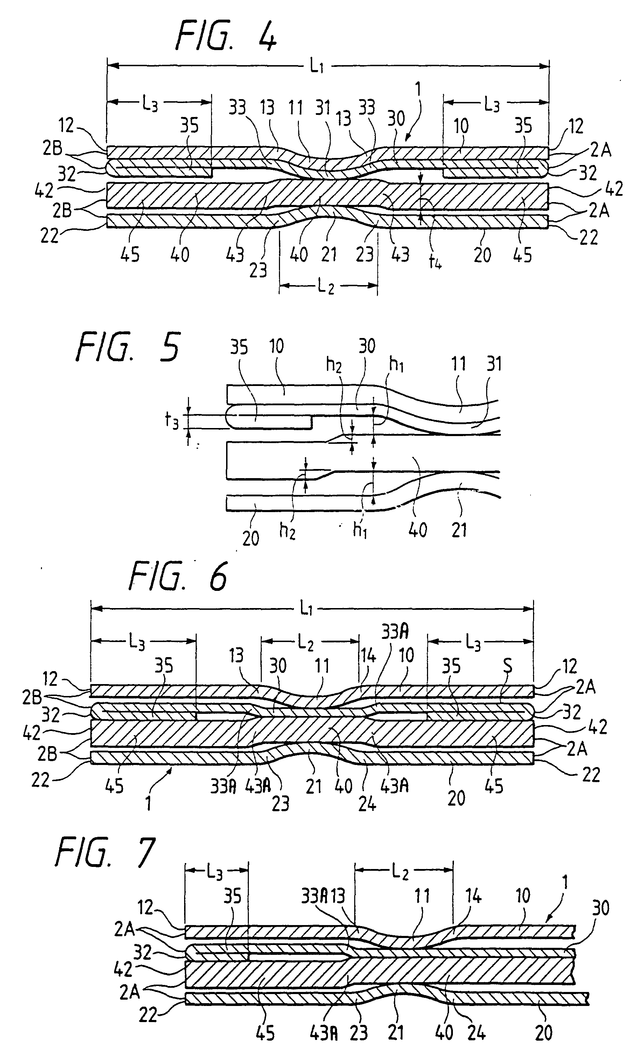

This metal gasket 1 can be constituted as shown in Figs. 3 and 4 by way of example. Fig. 3 shows the section of the metal gasket 1 along a line A - A connecting the hole 2A to an edge portion, and regions other than portions between the holes 2 (i.e. the region between the hole 2A and the hole 2B where the holes are adjacent to each other) have the same sectional structure. Fig. 4 shows the section between the holes 2 of the metal gasket 1 along a line B - B connecting the centers of the holes 2A and 2B in the boundary region of the adjacent holes 2A and 2B, and this sectional structure is the same for the boundary regions of the other adjacent holes 2.

In this metal gasket 1, the diameter of the hole 2 is 92 mm, for example, and the minimum distance L₁ between the holes 2 is about 10 mm. The metal gasket 1 is produced by laminating, in order from the cylinder head side to the cylinder block side, the upper plate 10, the regulation plate 30 having a bead shape being matched with that of the upper bead plate 10, the intermediate plate 40, and the lower bead plate 20. The upper and lower bead plates 10, 20 are produced from SUS 301 or SUS 304 material, having thickness t₁, t₂ of 0.25 mm and hardness of at least Hv 350. The regulation plate 30 is produced from SUS 304 material, having a thickness t₃ of 0.20 mm and hardness of at least Hv 350. The intermediate plate 40 is made from a material selected from SA1C, SUS 301, SUS 304, an At steel sheet or a Zn steel sheet, and has a thickness t₄ of 0.5 mm.

The peripheral portions of the upper bead plate 10, lower bead plate 20 and regulation plate 30 of the metal gasket 1, which are spaced outwardly from the inner peripheral end surfaces 12, 22, 32 defining the holes 2 for combustion chambers in the radial direction of the hole 2, respectively, are shaped into beads 11, 21, 31 having protuberances with mountain-like sections surrounding concentrically and annularly the hole 2. One of the surfaces of each of these beads 11, 21, 31 formed along each hole 2 is shaped into a convexity while the other surface is shaped into a concavity, in such a manner as to constitute a seal portion, and on the side extending towards the intermediate plate 40 in the regions from the starting edges 13, 23, 33 to the trailing edges 14, 24, 34 as viewed from the inside of each hole 2 in the radial direction. The bead 31 of the regulation plate 30 has the same shape as that of the bead 11 of the upper bead plate 10, and in the laminated state, the upper bead plate 10 and the regulation plate 30 overlap each other at the portions of the beads 11 and 31.

As shown in Fig. 2, the beads 11, 21, 31 around the hole 2A of the upper and lower bead plates 10, 20 and the regulation plate 30 overlap the beads 11 21, 31 around the adjacent hole 2B in the adjacent regions of these holes 2A and 23. In other words, the beads 11, 21, 31 merge in the region between the holes 2 and form one bead 11, 21, 31. However, the adjacent beads may be disposed with a slight gap therebetween without being put one upon another. The top surface of the convexity of the central region of the bead may be shaped substantially into a flat surface so as to stabilize the contact between the convexity of the bead and the intermediate plate 40. For example, a width L₂ as viewed in the radial direction of the bead is about 3 mm, and the height of the bead is about 0.25 mm.

A turnup portion 35 is formed around the inner edge 32 defining the hole 2 of the regulation plate 30 on the convexity side of the bead 31 and within the range in which it does not overlap with the bead 31 on the inner side in the radial direction of the bead 31. The width L₃ of this turnup portion 35 is, for example, about 2.5 mm. Furthermore, as to the sectional structure in the holes,such as the water holes 3, etc, between the regulation plate 30 and the intermediate plate 40, both are laminated in a flat shape, though the sectional structure is not shown in the drawings, and the peripheral portions of the holes 3 of the upper and lower bead plates 10, 20 are deformed in such a manner as to describe a slight recess (or mountain) from the other flat portions concentric with the holes 3, and to provide excellent sealability around the holes 3 at the time of fastening.

Figs. 3 and 4 show a gasket in which an intermediate plate 40 is sandwiched between the regulation plate 30 and the lower bead plate 20. The intermediate plate 40 has a uniform thickness t₄ and is generally flat in shape. However, at the peripheral regions 45 of the holes for combustion chambers opposing the turnup portions 35, the intermediate plate has offset portions bent towards the lower bead plate 20 with respect to other regions. In the example shown in the drawings, the offset portion 43 is formed in the bent form at a position slightly inside the positions where the beads 11, 21, 31 of each elastic metal plate are formed, in the radial direction of the hole 2. The peripheral edge region 45 of the hole 2 extending inward from the position of this offset portion 43 in the radial direction is deviated from the main body portion of the intermediate plate 40 towards the lower bead plate 20 by the offset portion 43. Accordingly, the offset portions 43 are positioned on both sides of the bead in the region between the holes 2. The height of the offset portions 43 is set to be less than the thickness of the regulation plate 30.

The dimensional relationship of the height of the beads 11, 21 of the upper and lower bead plates 10, 20, the height of the offset portions 43 and the thickness of the regulation plate 30 is shown in Fig. 5. The bead height of the bead 11 of the upper bead plate 10, the bead height of the bead 21 of the lower bead plate 20 and the bead height of the bead 31 of the regulation plate 30 are the same, and are expressed by h₁. The height of the offset portion 43 of the intermediate plate 40 is expressed by h₂. The thickness of the turnup portion 35 of the regulation plate 30 is expressed by t₃. The gap δᵤ between the turnup portion 35 of the regulation plate 30 and the peripheral edge region 45 of the hole 2 equipped with the offset portion of the intermediate plate 40 is δᵤ = h₁ + h₂ - t₃, and the gap δ_{L} between the lower bead plate 20 and the peripheral edge region 45 of the hole 2 of the intermediate plate 40 is δ_{L} = h₁ - h₂. The gap δ_{U} is preferably equal to the gap δ_{L}, and h₂ = t₃/2 because δ_{U} = δ_{L}. In other words, the height of the offset portion 43 is half of the thickness of the turnup portion 35 of the regulation plate 30. If the height h₂ of the offset portion 43 is greater than the thickness t₃ of the turnup portion 35, it is not possible to prevent complete compression of each bead 11, 21 of the upper bead plate 10 and the regulation plate 30. Accordingly, the height h₂ of the offset portion 43 must be smaller than the thickness t₃ of the turnup portion 35. With the exception of this latter-mentioned limitation, the dimensional relationship is not limited to the one described above but can be modified to some extent.

The operation of the gasket shown in Figs. 3 and 4 will now be explained. When the metal gasket 1 is disposed between the opposed fitting surfaces of an engine and is fastened, the beads 11, 21 of the upper and lower bead plates 10 undergo deformation, are strongly pressed at the portions 13, 14 and 23, 24 at the start and end of the beads 11, 21 to the opposed fitting surfaces, and form a double-seal portion around the hole 2. Seal portions are formed similarly around the water hole 3, the bolt hole 4 and the oil hole 5, and provide a good seal at the peripheries of these holes. Around each hole 2, the turnup portion 35 of the regulation plate 30 and the peripheral portion of the lower bead plate 20 come into contact with the surfaces of the peripheral region 45 of the hole 2 of the intermediate plate 40. Since the turnup portion 35 does not completely fill the height of the offset portion 43, it forms a seal portion in the region of the turnup portion 35, while the bead 11 of the upper bead plate 10 is not compressed completely. Accordingly, each bead does not undergo buckling. As to the lower bead plate 20, the bead 21 is also not completely compressed due to the offset portion 43 of the intermediate plate 40, and buckling of the beads 11, 21 is prevented. The turnup portion 35 has the function of a compensation portion. Particularly when non-uniformity of the opposed fitting surfaces occurs during fitting of the upper bead plate 10, the compensation portion absorbs distortion and deformation resulting from any load change after fastening. The offset of the intermediate plate 40 is formed by bend shaping and does not employ any machining involving turnup. In other words, there is no site which will cause breakage such as by cracking under the repeated load and the change of load acting on the intermediate plate 40. Therefore, adverse effects owing to the use of the intermediate plate 40 do not occur.

Machining of the regulation plate 30 which includes the turnup portion 35 can be changed arbitrarily. For example, when the bead plate 10 and the regulation plate 30 are laminated while the shape of their beads 11, 31 are matched, the regulation plate 30 is heat-treated after machining of the turnup portion 35 of the regulation plate 30. Therefore, the regulation plate 30 is heated and hardened, and acquires high toughness. Therefore, the regulation plate 30 itself has high toughness and its resistance to load change and repeated stress is improved. Furthermore, a reinforcing function is provided to the upper bead plate 10 laminated on the regulation plate 30. The thickness of the turnup portion 35 may be uniform at the time of turnup machining of the regulation plate 30, but machining can be made in such a manner that the turnup portion 35 is thick in the regions between the holes 2 but is thin in the regions other than the regions between the holes 2. Since strong seal portions are formed in the regions between the holes 2 where a high temperature and corrosive combustion gas is likely to leak, the metal gasket 1 strongly seals the leakage of this combustion gas. The width of the turnup portion 35 can be changed. In other words, the turnup portion 35 of the regulation plate 30 is machined so that its width is great in the regions between the holes 2 and is small in the other regions. In this case, stable and wide seal regions to withstand the leakage of combustion gas can be obtained in the regions between the holes 2 at which the combustion gas is likely to leak.

A first embodiment of the present invention is shown in Figs. 6 and 7. This gasket is of basically the same construction as that shown in Figs. 3 and 4. Therefore, like reference numerals will be used to identify like constituents and detailed description of common features will be omitted. In the metal gasket 1 shown in Figs. 6 and 7, the regulation plate 30 is not equipped with a bead portion. Therefore, the turnup portion 35 is laminated on the intermediate plate 40 without a gap. Accordingly, a space S is formed between the upper bead plate 10 and the turnup portion 35 of the regulation plate 30. The regulation plate 30 is heat-treated after turnup machining. Prevention of complete compression of the bead portions 11,21 of the upper and lower bad plates 10,20 and the compensation function of the turnup portion 35 are the same as in the gasket described above. Provided along the holes (2) are offset portions 33A and 43A of, respectively, the regulation plate 30 and the intermediate plate 40 which respectively extend toward said first and second elastic metallic plates 10,20. The offset portions 33A and 43A are shaped to a height smaller than the height of the respective beads 11,21 of, respectively, the first and second elastic metallic plates 10,20. The offset portions 33A,43A accordingly prevent full compression of the beads 11,21 respectively.

A second embodiment of the present invention is shown in Fig. 8. This gasket represents an embodiment wherein the turnup portion 35 of the regulation plate 30 interposes a soft member 50 and is then turned up. This construction can be applied to the foregoing embodiment. The soft member 50 may be a soft metal sheet, a heat-insulating graphite sheet, an aramide type heater sheet, a resin or a rubber. When the intermediate sheet is provided, the soft member 50 compensates for the thickness when the offset of the intermediate plate is great, and for the height of the beads 11, 21 when their thickness is too great, irrespective of the existence of the intermediate plate. Since the soft member 50 improves the deformability of the turnup portion 35 itself, it can cope with the deformation of the upper and lower bead plates 10, 20 at the time of fastening of the metal gasket 1 on the opposed fitting surfaces, and readily absorbs any irregularities in the opposed fitting surfaces. The soft member 50 can also absorb the vibration which occurs between the cylinder head and the cylinder block during the operation of the engine.

## Claims

1. A metal gasket (1) including elastic metal plates (10,20,30,40) disposed in use between a cylinder block and a cylinder head fixed to said cylinder block, which are made of a metal material, and having holes (2) for combustion chambers and beads (11, 21) as seal portions having convexities on one of the surfaces thereof and concavities on the other surface formed along said holes (2), said elastic metal plates (10,20,30,40) comprising first and second elastic metal plates (10, 20), and a regulation plate (30) and an intermediate plate (40) disposed between said first and second elastic metal plates (10, 20), said first elastic metal plate (10) having holes (2) and beads (11) formed along said holes (2), said beads (11) having convexities on one of the surfaces thereof and concavities on the other surface thereof, said second elastic metal plate (20) being so disposed as to oppose said regulation plate (30), said regulation plate (30) having holes (2) matching with said holes (2) in said first elastic metal plate (10) and turnup portions (35) facing outward in a radial direction of said holes (2) defined therein; said intermediate plate (40) having offset portions (43A) formed along said holes (2) defined therein, said offset portions (43A) extending toward said second elastic metal plate (20), said convexities of said beads (21) of said second elastic metal plate (20) being laminated on said intermediate plate (40) along the outside of said offset portions (43A), said convexities of said second beads (21) opposing and being in mutual contact with said intermediate plate (40), and said offset portions (43A) being shaped to a height smaller than the height of said beads (21) of said second elastic metal plate (20) so as to prevent full compression of said beads. (21) of said second elastic metal plate (20), **characterised in that** said regulation plate (30) has offset portions (33A) formed along said holes (2) defined therein, said offset portions (33A) extending toward said first elastic metal plate (10), **in that** said turnup portions (35) are turned up towards said intermediate plate (40), said convexities of said beads (11) of said first elastic metal plate (10) being laminated on said regulation plate (30) along the outside of said offset portions (33A), **in that** said turnup portions (35) are laminated on said intermediate plate (40) so as to come in close surface-to-surface contact with the intermediate plate (40) with leaving no clearance between them, and **in that** said offset portions (33A) are shaped to a height smaller than the height of said beads (11) of said first elastic metal plate (10) so as to prevent full compression of said beads (11) of said first elastic metal plate (10).

2. A metal gasket according to claim 1, wherein said turnup portions (35) oppose and are in mutual contact with said intermediate plate (40).

3. A metal gasket according to claim 1, wherein the thickness of said regulation plate (30) is about two-fifths of the thickness of said intermediate plate (40).

4. A metal gasket according to claim 1, wherein said regulation plate (30) is heat-treated after said turnup portions (35) are formed.

5. A metal gasket according to claim 1, wherein said turnup portions (35) are formed to a large thickness in the regions between said holes (2) of said regulation plate (30) and to a small thickness in the regions other than said regions between said holes (2) of said regulation plate (30).

6. A metal gasket according to claim 1, wherein said turnup portions (35) are formed to a large width in the regions between said holes (2) of said regulation plate (30) and to a small width in the regions other than said regions between said holes (2) of said regulation plate (30).

7. A metal gasket according to claim 1, wherein said turnup portions (35) contain a soft member (50).

8. A metal gasket according to claim 1, wherein the height of said offset portions (43) of said intermediate plate (40) is smaller than the thickness of said regulation plate (30).

9. A metal gasket according to claim 1, wherein the height of said offset portions (43) of said intermediate plate (40) is about one half of the thickness of said regulation plate (30).

10. A metal gasket according to claim 1, wherein the height of said offset portions (33) of said regulation plate (30) is about one half of the thickness of said regulation plate (30).

11. A metal gasket according to claim 1, wherein in use said first elastic metal plate (10) is disposed on the side of said cylinder head and said second elastic metal plate (20) is disposed on the side of said cylinder block.

## Patentansprüche

1. Metalldichtung (1) mit elastischen Metallplatten (10, 20,30,40), die bei Gebrauch zwischen einem Zylinderblock und einem am Zylinderblock befestigten Zylinderkopf angeordnet ist, welche aus metallischem Material hergestellt sind, und mit Öffnungen (2) für Verbrennungskammern sowie Wülsten (11,21) als Dichtungsteile, die auf einer ihrer Oberflächen konvexe Formen und auf der anderen Oberfläche längs der Öffnungen (2) gebildete konkave Formen aufweisen, wobei die elastischen Metallplatten (10,20,30,40) aus einer ersten und zweiten elastischen Metallplatte (10,20) und einer Regulierungsplatte (30) sowie einer Zwischenplatte (40) bestehen, die zwischen der ersten und zweiten elastischen Metallplatte (10,20) angeordnet sind, wobei die erste elastische Metallplatte (10) Öffnungen (2) und längs der Öffnungen (2) ausgebildete Wülste (11) aufweist, die Wülste (11) auf einer ihrer Oberflächen konvexe Formen und auf ihrer anderen Oberfläche konkave Formen aufweisen, die zweite elastische Metallplatte (20) so angeordnet ist, dass sie der Regulierungsplatte (30) gegenüberliegt, die Regulierungsplatte (30) Öffnungen (2), die mit den Öffnungen (2) in der ersten elastischen Metallplatte (10) übereinstimmen, und umgefalzte Teile (35) aufweist, die nach aussen in einer Radialrichtung der darin gebildeten Öffnungen (2) weisen; wobei die Zwischenplatte (40) längs der darin gebildeten Öffnungen (2) geformte versetzte Teile (43A) aufweist, die versetzten Teile (43A) sich zur zweiten elastischen Metallplatte (20) hin erstrecken, die konvexen Formen der Wülste (21) der zweiten elastischen Metallplatte (20) auf die Zwischenplatte (40) längs der Außenseite der versetzten Teile (43A) aufgeschichtet sind, die konvexen Formen der zweiten Wülste (21) der Zwischenplatte (40) gegenüberliegen und in gegenseitigem Kontakt mit dieser stehen, und die versetzten Teile (43A) mit einer Höhe geformt sind, die kleiner ist als die Höhe der Wülste (21) der zweiten elastischen Metallplatte (20), um eine volle Kompression der Wülste (21) der zweiten elastischen Metallplatte (20) zu verhindern, **dadurch gekennzeichnet, dass** die Regulierungsplatte (30) versetzte Teile (33A) aufweist, die längs der darin gebildeten Öffnungen (2) ausgebildet sind und die versetzten Teile (33A) sich zur ersten elastischen Metallplatte (10) hin erstrecken, dass die umgefalzten Teile (35) gegen die Zwischenplatte (40) hin umgefalzt sind, die konvexen Formen der Wülste (11) der ersten elastischen Metallplatte (10) auf die Regulierungsplatte (30) längs der Außenseite der versetzten Teile (33A) aufgeschichtet sind, dass die umgefalzten Teile (35) auf die Zwischenplatte (40) derart aufgeschichtet sind, dass sie in engen Oberflächenkontakt mit der Zwischenplatte (40) ohne Freilassen eines Zwischenraums zwischen denselben kommt, und dass die versetzten Teile (33A) mit einer Höhe geformt sind, die kleiner ist als die Höhe der Wülste (11) der ersten elastischen Metallplatte (10), um eine volle Kompression der Wülste (11) der ersten elastischen Metallplatte (10) zu verhindern.

2. Metalldichtung nach Anspruch 1, bei welcher die umgefalzten Teile (35) der Zwischenplatte (40) gegenüberliegen und in gegenseitigem Kontakt mit dieser stehen.

3. Metalldichtung nach Anspruch 1, bei welcher die Dicke der Regulierungsplatte (30) etwa zwei Fünftel der Dicke der Zwischenplatte (40) beträgt.

4. Metalldichtung nach Anspruch 1, bei welcher die Regulierungsplatte (30) nach der Ausbildung der umgefalzten Teile (35) wärmebehandelt ist.

5. Metalldichtung nach Anspruch 1, bei welcher die umgefalzten Teile (35) in den Bereichen zwischen den Öffnungen (2) der Regulierungsplatte (30) mit einer großen Dicke und in den übrigen Bereichen, die sich von den Bereichen zwischen den Öffnungen (2) und der Regulierungsplatte (30) unterscheiden, mit einer geringen Dicke ausgebildet sind.

6. Metalldichtung nach Anspruch 1, bei welcher die umgefalzten Teile (35) in den Bereichen zwischen den Öffnungen (2) der Regulierungsplatte (30) mit einer großen Breite und in den Bereichen, die sich von den Bereichen zwischen den Öffnungen (2) der Regulierungsplatte (30) unterscheiden, mit einer geringen Breite ausgebildet sind.

7. Metalldichtung nach Anspruch 1, bei welcher die umgefalzten Teile (35) ein weiches Glied (50) enthalten.

8. Metalldichtung nach Anspruch 1, bei welcher die Höhe der versetzten Teile (43) der Zwischenplatte (40) kleiner ist als die Dicke der Regulierungsplatte (30).

9. Metalldichtung nach Anspruch 1, bei welcher die Höhe der versetzten Teile (43) der Zwischenplatte (40) etwa der Hälfte der Dicke der Regulierungsplatte (30) entspricht.

10. Metalldichtung nach Anspruch 1, bei welcher die Höhe der versetzten Teile (43) der Regulierungsplatte (30) etwa der Hälfte der Dicke der Regulierungsplatte (30) entspricht.

11. Metalldichtung nach Anspruch 1, bei welcher bei Gebrauch die erste elastische Metallplatte (10) auf der Seite des Zylinderkopfes und die zweite elastische Metallplatte (20) auf der Seite des Zylinderblocks angeordnet ist.

## Revendications

1. Joint métallique (1) comprenant des plaques métalliques élastiques (10, 20, 30, 40) disposées lors de l'utilisation en un bloc-cylindres et une culasse fixée audit bloc-cylindres, qui sont formées d'une matière métallique, et ayant des trous (2) pour des chambres de combustion et des talons (11, 12) en tant que partie d'étanchéité ayant des convexités chez l'une de leurs surfaces et des concavités sur l'autre surface formées le long desdits trous (2), lesdites plaques métalliques élastiques (10, 20, 30, 40) comprenant des premières et secondes plaques métalliques élastiques (10, 20), et une plaque de régulation (30) et une plaque intermédiaire (40) disposées entre lesdites premières et secondes plaques métalliques élastiques (10, 20), ladite première plaque métallique élastique (10) ayant des trous (2) et des talons (11) formés le long desdits trous (2), lesdits talons (11) ayant des convexités sur l'une de leurs surfaces et des concavités sur l'autre surface, ladite seconde plaque métallique élastique (20) étant disposée de façon à être opposée à ladite plaque de régulation (30), ladite plaque de régulation (30) ayant des trous (2) concordant avec lesdits trous (2) de ladite première plaque métallique élastique (10) et des parties repliées (35) tournées vers l'extérieur dans une direction radiale desdits trous (2) définis en elle ; ladite plaque intermédiaire (40) ayant des parties déportées (43A) formées le long desdits trous (2) définis en elle, lesdites parties déportées (43A) s'étendant vers ladite seconde plaque métallique élastique (20), lesdites convexités desdits talons (21) de ladite seconde plaque métallique élastique (20) étant plaquées sur ladite plaque intermédiaire (40) le long du côté extérieur desdites parties déportées (43A), lesdites convexités desdits seconds talons (21) étant opposées à, et en contact mutuel avec, ladite plaque intermédiaire (40), et lesdites parties déportées (43A) étant façonnées à une hauteur inférieure à la hauteur desdits talons (21) de ladite seconde plaque métallique élastique (20) afin d'empêcher une compression complète desdits talons (21) de ladite seconde plaque métallique élastique (20), **caractérisé en ce que** ladite plaque (30) de régulation comporte des parties déportées (33A) formées le long desdits trous (2) définis en elle, lesdites parties déportées (33A) s'étendant vers ladite première plaque métallique élastique (10), **en ce que** lesdites parties repliées (35) sont repliées vers ladite plaque intermédiaire (40), lesdites convexités desdits talons (11) de ladite première plaque métallique élastique (10) étant plaquées sur ladite plaque (30) de régulation le long du côté extérieur desdites parties déportées (33A), **en ce que** lesdites parties repliées (35) sont plaquées sur ladite plaque intermédiaire (40) afin de venir en contact étroit surface contre surface avec la plaque intermédiaire (40) en ne laissant aucun espace entre elles, et **en ce que** lesdites parties déportées (33A) sont façonnées à une hauteur inférieure à la hauteur desdits talons (11) de ladite première plaque métallique élastique (10) afin d'empêcher une compression complète desdits talons (11) de ladite première plaque métallique élastique (10).

2. Joint métallique selon la revendication 1, dans lequel lesdites parties repliées (35) s'opposent à, et sont en contact mutuel avec, ladite plaque intermédiaire (40).

3. Joint métallique selon la revendication 1, dans lequel l'épaisseur de ladite plaque (30) de régulation est d'environ deux cinquièmes de l'épaisseur de ladite plaque intermédiaire (40).

4. Joint métallique selon la revendication 1, dans lequel ladite plaque (30) de régulation est soumise à un traitement thermique après la formation desdites parties repliées (35).

5. Joint métallique selon la revendication 1, dans lequel lesdites parties repliées (35) sont formées de façon à avoir une grande épaisseur dans les régions situées entre lesdits trous (2) de ladite plaque (30) de régulation et de façon à avoir une faible épaisseur dans les régions autres que lesdites régions entre lesdits trous (2) de ladite plaque (30) de régulation.

6. Joint métallique selon la revendication 1, dans lequel lesdites parties repliées (35) sont formées de façon à avoir une grande largeur dans les régions entre lesdits trous (2) de ladite plaque (30) de régulation et de façon à avoir une faible largeur dans les régions autres que lesdites régions entre lesdits trous (2) de ladite plaque (30) de régulation.

7. Joint métallique selon la revendication 1, dans lequel lesdites parties repliées (35) contiennent un élément tendre (50).

8. Joint métallique selon la revendication 1, dans lequel la hauteur desdites parties déportées (43) de ladite plaque intermédiaire (40) est inférieure à l'épaisseur de ladite plaque (30) de régulation.

9. Joint métallique selon la revendication 1, dans lequel la hauteur desdites parties déportées (43) de ladite plaque intermédiaire (40) est d'environ la moitié de l'épaisseur de ladite plaque (30) de régulation.

10. Joint métallique selon la revendication 1, dans lequel la hauteur desdites parties déportées (33) de ladite plaque (30) de régulation est d'environ la moitié de l'épaisseur de ladite plaque (30) de régulation.

11. Joint métallique selon la revendication 1, dans lequel, lors de l'utilisation, ladite première plaque métallique élastique (10) est disposée sur le côté de ladite culasse et ladite seconde plaque métallique élastique (20) est disposée sur le côté dudit bloc-cylindres.
